# EUROPEAN PATENT APPLICATION

(11) **EP 2 293 617 A1**
(43) Date of publication of application: **09.03.2011**
(21) Application number: 09011381.2
(22) Date of filing: 04.09.2009
(51) Int. Cl.: H04W 24/08

(54) **Method and system for maintaining a telecommunications network**

(71) Applicant: Koninklijke KPN N.V., 2516 CK The Hague (NL)
(72) Inventor: Brown, Robert Joseph, 2266 BL Leidschendam (NL); Beynon, Ashley Christopher, 8536 TR Oosterzee (NL); Van Holsteijn, Jacobus Corstiaan Maria, 2291 HC Wateringen (NL); Remmelzwaal,Leendert, 2221 WC Katwijk ZH (NL)
(74) Representative: Wuyts, Koenraad Maria

(57) **Abstract**

The invention relates to a method for maintaining a telecommunications network with a plurality of cells. First, cell performance notifications and network configuration notifications are assembled. The assembled notifications are then assembled per cell to form notification groupings. Finally, the formed notification groupings form a cell list based on a parameter related to the grouped assembled notifications.

## Description

### FIELD OF THE INVENTION

The invention relates to a method for maintaining a telecommunications network comprising a plurality of cells. The invention further relates to a method of maintaining a telecommunications network by means of a ticket list. The invention further relates to a computer program product comprising computer executable code, adapted to perform, when executed by a processor, such method of maintaining. Finally, the invention relates to a system for maintaining a telecommunications network.

### BACKGROUND OF THE INVENTION

Telecommunication networks comprising a plurality of cells are widely used. For example, mobile telephone networks are widely available for Global System for Mobile Communications (GSM). These networks are also referred to as second generation (2G) networks. Nowadays, third generation (3G) become increasingly more popular. A technology associated with a 3G-network is the so-called Universal Mobile Telecommunications System (UMTS).

Both 2G and 3G-networks comprise a plurality of cells or base stations that are communicating with a mobile station, for example a mobile telephone. The configuration of the network changes continuously. For example, new cells may be added, cells may be transferred, specifications of a certain cell may be amended (e.g. from 2G-functionality to 3G-functionality) etc. Furthermore, network configuration settings may be wrong or wrongly updated.

Additionally, the performance of components within the network may vary over time. For example, the performance of components may decrease due to aging, may vary due to weather conditions, may be affected by a traffic load which is dynamic over time, etc. Furthermore, optimum network parameter settings for obtaining a good and steady performance of the telecommunications network change continuously as well.

As a result, in order to keep a telecommunications network running at a desired performance level, continuous maintenance is needed. Generally, radio engineers receive notifications that are generated from a plurality of data sources. Due to the independence of these sources, it is difficult to decide what notifications have priority over other notifications. Based on experience, radio engineers manually organize the notifications and determine which notifications should be handled first, and which notifications can be dealt with later.

However, this process of maintaining a telecommunications network by prioritization is inefficient, highly unreliable and time consuming. For example, unexpected failures within a telecommunications network are detected at a late stage, if they are recognized at all. Furthermore, priorities cannot be changed rapidly to account for an acute failure.

International application WO2009/034367 describes a system and method for maintaining mobile telephone networks in which handling of these notifications is automated by using a rules engine. The rules engine operates on performance data and configuration data in accordance with a set of hierarchical rules. The output of the rules engine can be used by a service engineer to manage the telecommunications network. Although this method is an improvement over the manual maintaining process with prioritization described before, it still does not address unexpected failures within a telecommunications network and/or docs not allow for a rapid change of priorities if an acute failure occurs.

### SUMMARY OF THE INVENTION

A further improvement of a method of maintaining a telecommunications network is desired. For this purpose, embodiments of the invention relate to a method for maintaining a telecommunications network comprising a plurality of cells, the method comprising:
assembling cell performance notifications; assembling network configuration notifications;
forming notification groupings by grouping the assembled notifications per cell; forming a cell list by prioritizing the formed notification groupings based on a parameter related to the grouped assembled notifications.

The method may further comprise: providing a handover list, the handover list comprising information per cell regarding handover attempts with neighboring cells; generating tickets based on the cell list and the handover list, each ticket comprising one or more grouped assembled notifications; and forming a ticket list by prioritizing the generated tickets based on the parameter related to the grouped assembled notifications. An alarm may be appended to a ticket if the alarm is related to a cell that is covered by the ticket.

Generating tickets may comprise: selecting a record from the cell list related to the cell with an extreme, for example the highest, cumulative value of the parameter related to the grouped assembled notifications; creating a ticket comprising one or more notifications related to the selected cell, and removing the record related to the selected cell from the cell list; looking up a record in the handover list related to the selected cell, and checking whether a neighboring cell qualifies as a cell being involved in more than a threshold number or threshold percentage of thc total number of handover attempts registered with respect to the selected cell; obtaining notifications related to a qualified neighboring cell from a record related to said the qualified neighboring cell in the cell list, and appending the notifications to the created ticket; removing the record related to the qualified neighboring cell from the cell list.

In an embodiment, the invention relates to a method of maintaining a telecommunications network by means of a ticket list, the method comprising performing embodiments of the method described above repetitively. Preferably, the method described above is performed at regular intervals. The regular intervals may be set in a certain number of time units. Examples of time units include seconds, minutes, hours, days, weeks, months, and years.

In an embodiment, the invention relates to a computer program product, comprising computer executable code adapted to perform, when executed by a processor, embodiments of aforementioned methods. The computer executable code may be stored on a computer readable medium.

Finally, in an embodiment, the invention relates to a system for maintaining a telecommunications network comprising a plurality of cells, the system comprising: at least one data input for receiving notifications; a first database for storing a cell list; a processor for forming the cell list based on the notifications received via the at least one data input in a way as defined by any embodiment of the methods described above. The system may further comprises a second database for storing a handover list.

Further aspects of the invention and embodiments as defined in the claims will be clarified with reference to the attached drawings and corresponding description. It will be understood that the invention is not in anyway restricted to the embodiments disclosed in these drawings.

### BRIEF DESCRIPTION OF THE DRAWINGS

In the drawings:
FIG. 1 shows a block diagram schematically illustrating a method of maintaining a telecommunications network according to an embodiment of the invention;
FIG. 2 shows a block diagram schematically illustrating a method of maintaining a telecommunications network according to another embodiment of the invention;
FIG. 3 shows a block diagram schematically illustrating generation of tickets according to an embodiment of the invention;
FIG. 4 schematically illustrates a flow diagram of a method for managing a ticket list according to an embodiment of the invention;
FIG. 5 schematically illustrates an exemplary telecommunications network comprising a system for prioritizing notifications related to maintenance of the telecommunications network according to an embodiment of the invention.

### DETAILED DESCRIPTION OF THE DRAWINGS

The following is a description of certain embodiments of the invention, given by way of example only.

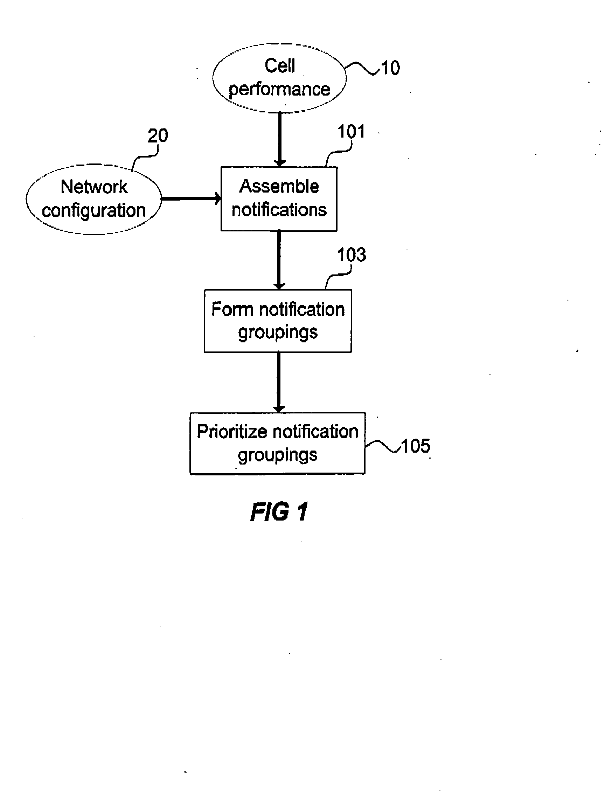

FIG. 1 shows a block diagram schematically illustrating a method of maintaining a telecommunications network according to an embodiment of the invention. The telecommunications network comprises a plurality of cells, e.g. base stations for use in a second generation (2G) and/or third generation (3G) telephone network.

The method includes prioritization of notifications. First notifications are assembled in action 101. The notifications may be notifications related to cell performance 10, and/or notifications related to the network configuration 20. The notifications may be provided with a weighing factor for identifying the importance of the respective notification. A relatively high weighing factor may correspond to a relatively important notification, while a notification with a relatively low weighing factor may then correspond to a notification of less importance. This type of weighing factor will be used to explain embodiments of the invention throughout this description. Alternatively, assigning weighing factors can be such that the lower the weighing factor of the notification, the more important that notification is.

Notifications related to cell performance may relate to actual performance values of individual cells within the telecommunications network. Alternatively, or additionally, performance notifications may relate to performance changes of individual cells within the telecommunications network. Performance notifications may relate to key performance indicators (KPI's) that are being monitored. Examples of KPI's include, but are not limited to the percentage of dropped calls, the percentage of failed handovers, absolute number of dropped calls, etc. The performance may be addressed by means of an indication relative to a maximum theoretical performance the cell can deliver. Alternatively or additionally, the performance may be expressed in an absolute value.

Notifications related to configuration of the network may relate to the configuration of a cell within the telecommunications network and/or relate to changes of this configuration. Examples of such changes include but are not limited to changes in parameter settings such as transmission frequency, handover margin power budget, hopping on/off, cell power, etc.

Performance and configuration notifications may be classified per radio technology used. For example, the notifications available for 2G-technotogy (e.g. GSM) may be different from notifications available for 3G-technology (e.g. UMTS).

The assembled notifications are used to form notification groupings in action 103, also referred to as "ticket". Each notification grouping or ticket comprises notifications corresponding to a particular cell of the plurality of cells within the telecommunications network. Because the particular cell is the source of the notification, the cell is also referred to as "source cell". Forming the tickets is performed by grouping the assembled notifications per cell within the telecommunications network.

Starting with the generated tickets, in action 105 a cell list is formed. The cell list prioritizes the formed notification groupings or tickets. In this example, prioritization is based on a cumulative value of the weighing factors of the grouped assembled notifications per cell. However, it is also possible to use a different parameter for prioritization, for example the number of notifications per ticket.

Forming a cell list by prioritizing the formed notification groupings based on a parameter related to the grouped assembled notifications may result in an unexpected correlation of notifications. As a result, previously non-recognized origins of network problems may be identified and eliminated. Additionally, prioritization based on a parameter related to the grouped assembled notifications is very flexible. For example, changes in network configuration will not have a significant effect on the method itself, but may only have a significant effect on the outcome.

Using a cumulative value of weighing factors enables flexible scheduling of maintenance schedules. For example, the cumulative value of weighing factors assigned to notifications related to a malfunctioning cell that fulfils an important role within the telecommunications network will be higher than such cumulative value corresponding to notifications related to a similarly malfunctioning, but less important cell. The more important cell will thus get prioritized attention. This may even be the case if the problem related to the more important cell was notified later than the similar problem related to the less important cell.

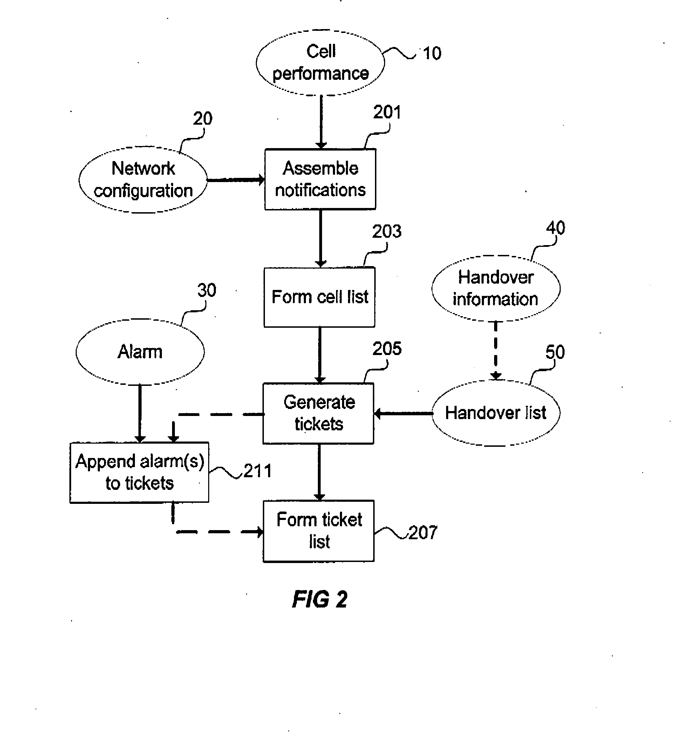

FIG. 2 shows a block diagram schematically illustrating a method of maintaining a telecommunications network according to another embodiment of the invention. In the method schematically illustrated in FIG. 2, handover attempts between cells in the telecommunications network are taken into account

Assembling notifications is performed in action **201** in a similar way as discussed with reference to FIG. 1. Subsequently, in action **203,** a cell list is formed. The cell list comprises a plurality of records, each record comprising notifications related to a single cell. The cell list formation may be the result of a formation of notification groupings and subsequent prioritization as described with reference to FIG. 1 by actions **103** and **105** in FIG. 1.

After formation of a cell list in action **203,** tickets are generated in action **205.** The tickets are generated based on the cell list formed in action **203** and based on a handover list **50.** The handover list **50** comprises information regarding handover attempts with neighboring cells, hereafter referred to as handover information **40.** The handover information **40** in the handover list **50** can be reviewed per cell, hereafter referred to as source cell because the handover attempts are viewed with this cell as starting point. Preferably, the handover information **40** relates to handover attempts performed by the source cell to reach neighboring cells, also referred to as "target cells". Alternatively, the handover information **40** may relate to handover attempts performed by neighboring cells to reach the source cell. The handover attempts may relate to both successful attempts and unsuccessful attempts. Registering the unsuccessful attempts can be of importance to identify malfunctioning connections within the telecommunications network.

All handover attempts made by a certain cell during a certain period of time may be stored in a record within the handover list **50.** The information related to handover attempts between a source cell and a target cell may be stored by registration of the absolute number of handover attempts. However, it is preferred that the number of handover attempts is related to the total number of handover attempts performed by the source cell. Storage of handover information **40** in this way allows determining whether a target cell qualifies as a cell being involved in more than a predetermined threshold or a threshold percentage of the total number of handover attempts registered with respect to the respective source cell. The handover attempts listed in a record related to a source cell are preferably grouped per target cell.

Finally, the generated tickets may be organized to form a ticket list in action **207.** The ticket list may be formed by prioritizing the generated tickets based on a parameter related to the tickets. The parameter may be the number of notifications covered by the ticket. Preferably, prioritization of the ticket is performed by using a cumulative value of weighing factors assigned to the notifications covered by the ticket.

In an embodiment, alarms **30** raised with respect to certain cells in the network may be appended to the tickets covering notifications for the respective cells in action **211.** Alarms **30** may be generated by detection of a malfunctioning of components. Alarms **30** may for example be related to detection of undesired exposure of parts of a cell to open-air, e.g. non-closure of a door used to reach these parts for maintenance, detection of a cell lacking a broadcast channel, detection of a cell with no transactions, a decrease/increase of a certain parameter below/above a predetermined threshold, etc.

In an embodiment, trouble tickets may be appended to the ticket list. Such trouble tickets may contain cell-related customer complaints, work orders for repairs, tasks for different departments, etc. Instead of adding these tickets to the ticket list, information provided in these tickets may be appended to tickets already present in the ticket list for the cells that are affected.

In an embodiment, in the formation of the ticket list in action **207,** some tickets may be refused in view of exception information. For example, some cells in the network may have an exceptionally high drop rate of telephone calls due to the fact that the cell is located near a country border. If a mobile phone user passes the border, there is an elevated chance that the call will be dropped. This may be caused by the fact that providers only provide national coverage, and crossing the border generally means that a change of provider is needed. The respective cell will show a poor performance. However, as the provider cannot improve this performance by maintenance efforts, it is preferred that notifications with respect to these cells may be discarded or downgraded in the ticket forming and prioritization process. As a result, these cells will not "automatically" be on top of the ticket list.

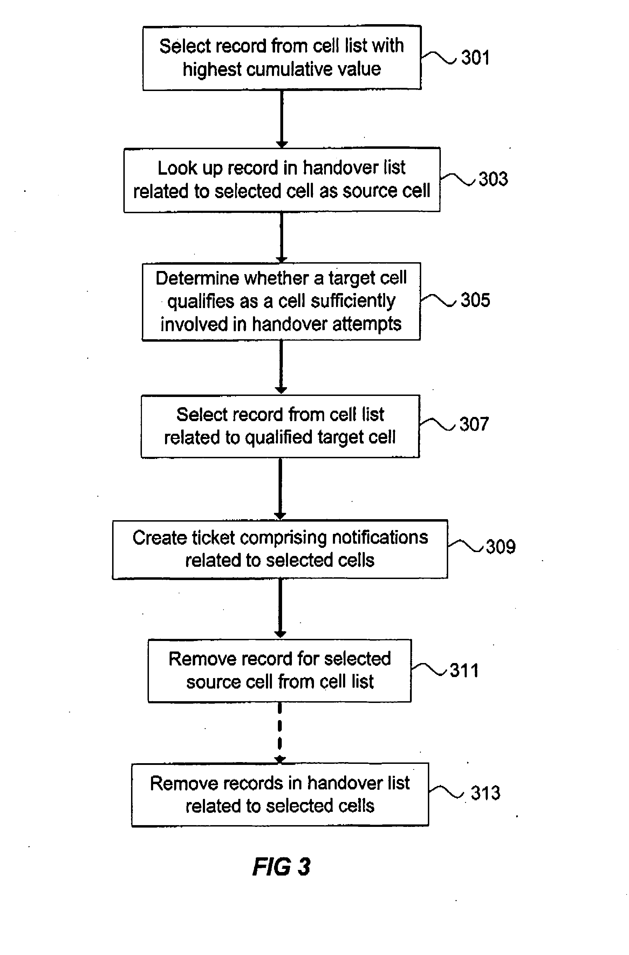

FIG. 3 shows a block diagram schematically illustrating an embodiment of the action of generating tickets as described with reference to action **205** in FIG. 2. In this embodiment, a weighing factor is assigned to each notification as described earlier with reference to FIG. 1.

First, the record related to the cell in the cell list with the highest cumulative value is selected from the cell list in action **301.** As mentioned earlier, highest is not meant to be limiting. In case a lower weighing factor is assigned to a more important notification, the lowest cumulative value will be selected. The selection thus relates to the top priority cell within the pending cell list as formed by the process described earlier with reference to FIGS. 1 and 2.

Then, in action **303,** a record of the selected cell is looked up in the handover list **50,** the selected cell being considered as source cell. From the information in the record in the handover list **50,** it is determined whether a neighboring target cell qualifies as a cell being involved in a sufficient number of handover attempts with the selected source cell in action 305. A sufficient number of handover attempts preferably means that the number of handover attempts between the identified target cell and the source cell is such that it exceeds a certain percentage of the total handover attempts made by that source cell. Alternatively, a sufficient number of handover attempts may relate to a number of handover attempts exceeding an absolute number of handover attempts.

Next, a record of a qualified target cell is selected in action **307.** Notifications present in such a record are then added to the notifications related to the source cell so as to create a ticket comprising notifications related to both the source cell and the qualified target cell in action **309.** Finally, the record related to the selected source cell is removed from the cell list in action **311.**

Preferably, embodiments of a method of generating tickets further comprises removing records in the handover list related to both the source cell and the qualified target cell in action **313.** By removing records related to these cells, the chance that multiple tickets related to the same network problem will be generated is minimal. A single ticket addresses a problem area.

Note that it is very well possible that more than one cell qualifies as a target cell sufficiently involved in handover attempts with the source cell. Actions **307, 309,** and **311** are then performed with respect to the qualified cells. Similarly, it is possible, that no target cell qualifies as a target cell sufficiently involved in handover attempts with the source cell. In that case, after action **305,** the method proceeds to action **309.**

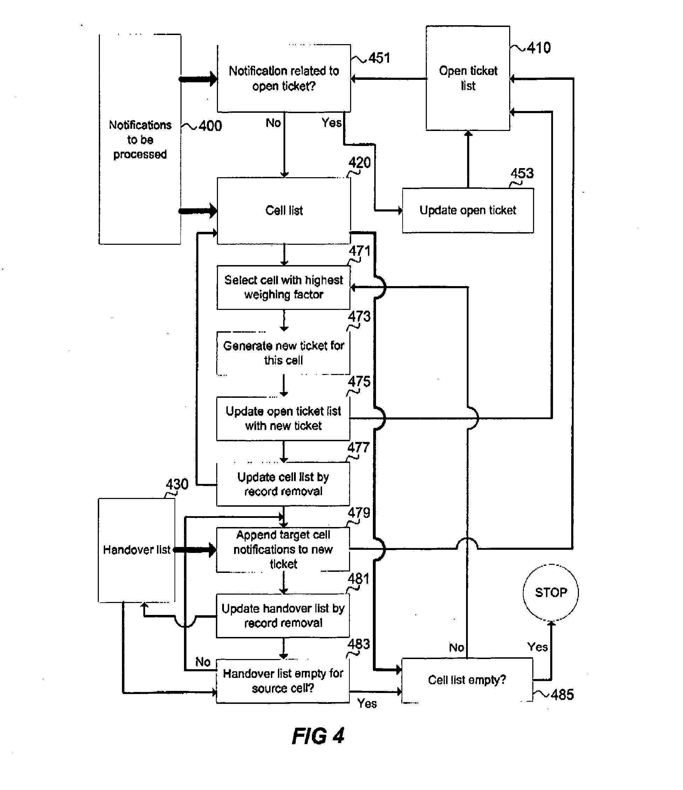

Embodiments of a method of maintaining a telecommunications network, for example the embodiments explained with reference to FIGS. 1, 2, and 3, can be used in combination with managing a ticket list used for maintenance of a telecommunications network as will be explained with reference to FIG. 4.

FIG. 4 schematically illustrates a flow diagram of a method of maintaining a telecommunications network including the managing of a ticket list according to an embodiment of the invention. The ticket list is used for maintaining a telecommunications network comprising a plurality of cells. Hereafter, the ticket list will be referred to as an open ticket list. A ticket is considered to be open if one or more tasks covered by the ticket are either new or not yet performed. Alternatively, a ticket may be closed, i.e. all tasks covered by the ticket have been performed. Within FIG. 4 notifications to be processed are denoted by reference number **400,** the open ticket list by reference number **410,** the cell list by reference number **420,** and the handover list by reference number **430.**

The method schematically illustrated in FIG. 4 can be combined with elements of the method of maintaining as described with reference to FIGS. 1, 2 and 3. These elements are performed repetitively, preferably at regular intervals. The regular intervals are set in a certain number of time units. The time units may be selected from a group of time units, e.g. seconds, minutes, hours, days, weeks, months, or years.

In an embodiment, the method for managing a ticket list starts in action **451** by checking whether or not the notification to be processed **400** relates to an open ticket that is present in the open ticket list **410.** This can be done by identifying the cell for which the notification **400** is generated and then verifying whether an open ticket in the open ticket list **410** comprises one or more tasks related to that cell. If so, the open ticket is updated in action **453,** and the updated open ticket is stored in the open ticket list **410.** However, if the notification to be processed **400** does not relate to an open ticket in the open ticket list **410,** the notification **400** is stored in the cell list **420** referring to the cell it was generated for. In the cell list **420,** notifications **400** are arranged per cell.

In the method shown in FIG. 4, notifications **400** stored in the cell list **420** undergo a method of generating tickets similar to the method schematically described with reference to FIG. 3. That is, periodically, information stored in the cell list **420** is processed in the following way.

First, the cell in the cell list **420** with highest weighing factor is selected in action **471.** For this cell, a new ticket is generated in action **473.** After generation of the new ticket, the open ticket list **410** is updated with the new cell ticket in action **475.** Additionally, the record directed to the respective cell is removed from the cell list **420** in action **477.**

Then the handover list **430** is consulted to check for handover information related to the respective cell. In particular neighboring target cells are identified that take part in a sufficient number of handover attempts with the respective cell, which is considered as the source cell for this matter. Although this situation will not occur very often, it is possible that no target cell can be identified.

Although reference is made to the handover list **420** as if it is the only one available, in practice this action and following actions arc performed with respect to a copy of the handover list **420.** The use of a copy of the handover list enables the use of the same handover list **420** during several repetitions of the method of managing a ticket list. For example, the regular interval referred to earlier may be a day, while the handover list **420** is refreshed once a week.

Notifications within the cell list **420** related to one or more identified neighboring target cells are then appended to the new cell ticket in the open ticket list **410** in action **479.** In action **481,** the handover list **430** is updated by removal of the cell record related to the respective source cell. Furthermore, preferably, cell records related to the one or more identified neighboring target cells are removed from the handover list **430.** The removal of the identified neighboring target cells may be executed in different ways.

In an embodiment, cell records related to identified neighboring target cells are removed one by one. In action **483,** it is then checked whether the handover list **430** is empty for the respective source cell, i.e. notifications with respect to all identified neighboring target cells of the respective source cell have been appended to the new cell ticket in the open ticket list **410.** If this is not the case, the method returns to action **479** to deal with one or more additional identified neighboring target cells. Actions **479** and **481** are then repeated until the handover list **430** is empty for the respective source cell. Alternatively, appending the target cell notifications in action **479** and removal of records in action **481** of all identified target cells is performed in one pass. In that case, action **483** is optional, it may be used as a backup check.

If action **483** reveals that the handover list **430** is empty for the respective source cell, the method of maintaining proceeds to action **485.** In action **485,** it is checked whether the cell list **420** is empty. If so, the method terminates. If there are still records present in the cell list **420,** actions **471** through **483** are repeated.

In embodiments of the invention, the regular intervals are smaller than the time it takes to complete the ticket list. In such cases, the ticket list provided to a maintenance engineer may be updated on the fly, i.e. the maintenance issues to be solved during the day may change.

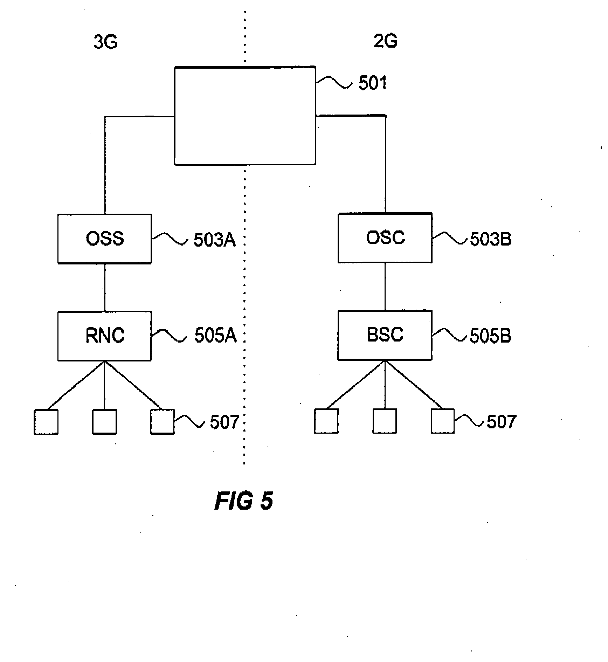

FIG. 5 schematically illustrates an exemplary telecommunications network comprising a system for maintaining the telecommunications network according to an embodiment of the invention. The system **501** may comprise a processor arranged for performing any of the methods described before, including the method described with reference to FIGS. 1 to 4.

The exemplary telecommunications network in FIG. 5 comprises two parts, a first part related to 2G-technology (e.g. GSM) and a second part related to 3G-technology (e.g. UMTS). The system **501** communicates via cells **507** in the 3G-part of the network via an operating switching system (OSS) **503A** and a radio network controller (RNC) 505A. Communication with cells **507** in the 2G-part of the network is executed via an operating switching center (OSC) **503B** and a base station controller (BSC) **505B.**

The system **501** may take the form of a computer device. The computer device comprises the processor and a memory, which is communicatively coupled to the processor. Examples of a memory include, but are not limited to, Read-Only Memory (ROM), Random Access Memory (RAM), Erasable Programmable ROM (EPROM), Electrically Erasable Programmable ROM (EEPROM), and flash memory.

The computer device may further comprise a user interface to enable input of instructions or notifications by external users. Examples of a user interface include, but are not limited to, a mouse, a keyboard, and a touch screen.

The computer device may be arranged to load computer executable code stored on a computer readable medium, e.g. a Compact Disc Read-Only Memory (CD ROM), a Digital Video Disc (DVD) or any other type of known computer-readable data carrier. For this purpose the computer device may comprise a reading unit.

The computer executable code stored on the computer readable medium, after loading of the code into the memory of the computer device, may be adapted to perform the method of maintaining a telecommunications network as described before, e.g. with reference to FIGS. 1 to 4.

Alternatively or additionally, embodiments of the method of maintaining a telecommunications network as described before, e.g. with reference to FIGS. 1 to 4, may take the form of a computer program product comprising computer executable code to perform such a method when executed on a computer device. The method may then be performed by a processor of the computer device after loading the computer executable code into a memory of the computer device.

The invention has been described by reference to certain embodiments discussed above. It will be recognized that these embodiments are susceptible to various modifications and alternative forms well known to those of skill in the art.

## Claims

1. A method for maintaining a telecommunications network comprising a plurality of cells, the method comprising:
- assembling cell performance notifications;
- assembling network configuration notifications;
- forming notification groupings by grouping the assembled notifications per cell;
- forming a cell list by prioritizing the formed notification groupings based on a parameter related to the grouped assembled notifications.

2. The method of claim 1, further comprising:
- providing a handover list, the handover list comprising information per cell regarding handover attempts with neighboring cells;
- generating tickets based on the cell list and the handover list, each ticket comprising one or more grouped assembled notifications; and
- forming a ticket list by prioritizing the generated tickets based on the parameter related to the grouped assembled notifications.

3. The method of claim 2, further comprising appending an alarm to a ticket if the alarm is related to a cell that is covered by the ticket.

4. The method of claim 2 or 3, wherein generating tickets comprises:
- selecting a record from the cell list related to the cell with an extreme, for example the highest, cumulative value of the parameter related to the grouped assembled notifications;
- creating a ticket comprising one or more notifications related to the selected cell, and removing the record related to the selected cell from the cell list;
- looking up a record in the handover list related to the selected cell, and checking whether a neighboring cell qualifies as a cell being involved in more than a threshold number or threshold percentage of the total number of handover attempts registered with respect to the selected cell;
- obtaining notifications related to a qualified neighboring cell from a record related to said the qualified neighboring cell in the cell list, and appending the notifications to the created ticket;
- removing the record related to the qualified neighboring cell from the cell list.

5. The method of claim 4, wherein said looking up, checking, obtaining, appending, and removing is repeated until no further neighboring cell qualifies.

6. The method of claim 4, wherein said obtaining, appending, and removing arc performed with respect to all neighboring cells that qualify as a cell being involved in more than the (predetermined) threshold percentage of the total number of handover attempts registered with respect to the selected cell.

7. The method of any one of claims 4 - 6, wherein said identifying comprises identifying neighboring cells that are involved in handover attempts performed by the selected cell.

8. The method of any one of claims 4 - 7, further comprising continuing said selecting, said looking up, said obtaining, said creating and said removing until the number of records within the cell list equals a predetermined value, preferably zero.

9. The method of any one of claims 4 - 8, wherein the method further comprises removing entries in the handover list related to said at least one identified neighboring cell.

10. The method of any one of claims 1 - 9, wherein the parameter corresponds to the number of notifications.

11. The method of any one of claims 1 - 9, wherein the notifications are provided with a weighing factor for identifying the importance of the respective notification, and the parameter corresponds to a cumulative value of the weighing factors of the grouped assembled notifications per cell.

12. The method of any one of claims 1 - 11, wherein the cell performance notifications relate to performance changes of cells within the network and/or the network configuration notifications relate to configuration changes within the network.

13. A method of maintaining a telecommunications network by means of a ticket list, the method comprising performing the method of any one of claims 2 - 12 repetitively, preferably at regular intervals, preferably set in a certain number of time units, the time units for example being selected from a group of time units consisting of seconds, minutes, hours, days, weeks, months, and years.

14. A computer program product comprising computer executable code, for example stored on a computer readable medium, adapted to perform, when executed by a processor, the method as defined by any one of claims 1 - 13.

15. A system for maintaining a telecommunications network comprising a plurality of cells, the system comprising:
- at least one data input for receiving notifications;
- a first database for storing a cell list;
- a processor for forming the cell list based on the notifications received via the at least one data input according to the method of any one of claims 1 - 13.

16. The system of claim 15, wherein the system further comprises a second database for storing a handover list, and the processor is further arranged to perform the method of any one of claims 2 - 13.

## Amended claims

### Amended claims in accordance with Rule 137(2) EPC.

**1.** A method for maintaining a telecommunications network comprising a plurality of cells, the method comprising:
- assembling cell performance notifications;
- assembling network configuration notifications;
- forming notification groupings by grouping the assembled notifications per cell; **characterized in**:
- providing the notifications with a weighing factor for identifying the importance of the respective notification,
- forming a cell list by prioritizing the formed notification groupings based on a cumulative value of the weighing factors of the grouped assembled notifications.

**2.** The method of claim 1, further comprising:
- providing a handover list, the handover list comprising information per cell regarding handover attempts with neighboring cells;
- generating tickets based on the cell list and the handover list, each ticket comprising one or more grouped assembled notifications; and
- forming a ticket list by prioritizing the generated tickets based on a cumulative value of the weighing factors of the grouped assembled notifications.

**3.** The method of claim 2, further comprising appending an alarm to a ticket if the alarm is related to a cell that is covered by the ticket.

**4.** The method of claim 2 or 3, wherein generating tickets comprises:
- selecting a record from the cell list related to the cell with an extreme, for example the highest, cumulative value of the weighing factors of the grouped assembled notifications;
- creating a ticket comprising one or more notifications related to the selected cell, and removing the record related to the selected cell from the cell list;
- looking up a record in the handover list related to the selected cell, and checking whether a neighboring cell qualifies as a cell being involved in more than a threshold number or threshold percentage of the total number of handover attempts registered with respect to the selected cell;
- obtaining notifications related to a qualified neighboring cell from a record related to said the qualified neighboring cell in the cell list, and appending the notifications to the created ticket;
- removing the record related to the qualified neighboring cell from the cell list.

**5.** The method of claim 4, wherein said looking up, checking, obtaining, appending, and removing is repeated until no further neighboring cell qualifies.

**6.** The method of claim 4, wherein said obtaining, appending, and removing are performed with respect to all neighboring cells that qualify as a cell being involved in more than the (predetermined) threshold percentage of the total number of handover attempts registered with respect to the selected cell.

**7.** The method of any one of claims 4 - 6, further comprising continuing said selecting, said looking up, said obtaining, said creating and said removing until the number of records within the cell list equals a predetermined value, preferably zero.

**8.** The method of any one of claims 4 - 7, wherein the method further comprises removing entries in the handover list related to said at least one identified neighboring cell.

**9.** The method of any one of claims 1 - 8, wherein the cell performance notifications relate to performance changes of cells within the network and/or the network configuration notifications relate to configuration changes within the network.

**10.** A method of maintaining a telecommunications network according to claims 2-9 wherein the method is performed repetitively.

**11.** A computer program product comprising computer executable code, for example stored on a computer readable medium, adapted to perform, when executed by a processor, the method as defined by any one of claims 1 - 10.

**12.** A system for maintaining a telecommunications network comprising a plurality of cells, the system comprising:
- at least one data input for receiving notifications;
- a first database for storing a cell list;
- a processor for forming the cell list based on the notifications received via the at least one data input according to the method of any one of claims 1 - 10.

**13.** The system of claim 15, wherein the system further comprises a second database for storing a handover list, and the processor is further arranged to perform the method of any one of claims 2 - 10.
